(19) **Europäisches Patentamt**
**European Patent Office**
**Office européen des brevets**

(11) **EP 4 617 317 A1**

(12) **EUROPEAN PATENT APPLICATION**
published in accordance with Art. 153(4) EPC

(43) Date of publication:
**17.09.2025 Bulletin 2025/38**

(21) Application number: **23888513.1**

(22) Date of filing: **26.10.2023**

(51) International Patent Classification (IPC):
**C08L 67/00** (2006.01)   **B32B 27/18** (2006.01)
**B32B 27/40** (2006.01)   **B65D 65/40** (2006.01)
**C08K 3/22** (2006.01)   **C08L 75/04** (2006.01)
**C09D 7/61** (2018.01)   **C09D 133/00** (2006.01)
**C09D 175/04** (2006.01)

(52) Cooperative Patent Classification (CPC):
**B32B 27/18; B32B 27/40; B65D 65/40; C08K 3/22;
C08L 67/00; C08L 75/04; C09D 7/61; C09D 133/00;
C09D 175/04**

(86) International application number:
**PCT/JP2023/038626**

(87) International publication number:
**WO 2024/101165 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.11.2022 JP 2022180188**

(71) Applicant: **DIC Corporation
Tokyo 174-8520 (JP)**

(72) Inventors:
• **OKUBO, Tomoo
Tokyo 103-8233 (JP)**
• **HARADA, Tomoaki
Sakura-shi, Chiba 285-8668 (JP)**
• **HAYASHI, Masanori
Ichihara-shi, Chiba 290-8585 (JP)**

(74) Representative: **Kraus & Lederer PartGmbB
Thomas-Wimmer-Ring 15
80539 München (DE)**

(54) **GAS BARRIER COMPOSITION, COATING AGENT AND MULTILAYER BODY**

(57)    A gas barrier composition including (A) a polyester polyol resin or polyurethane polyol resin having an acid value, (B) a divalent metal compound, and an organic solvent, in which the acid value of the polyester polyol resin or polyurethane polyol resin (A) in the composition is 150 mgKOH/g or less; a gas barrier coating agent containing the composition described above; a laminate body having a coat layer obtained by applying the coating agent described above; and a packaging material. It is preferable that the divalent metal compound (B) is at least one member selected from zinc compounds, magnesium compounds, and calcium compounds.

# EP 4 617 317 A1

**Description**

TECHNICAL FIELD

The present invention provides a composition having gas barrier properties. In addition, it also provides a coating agent containing the gas barrier composition and a laminate body obtained by applying the coating agent.

BACKGROUND ART

Packaging materials used for packaging food products, medical supplies, and the like are required to prevent the degradation of the contents, particularly oxidation due to oxygen. In response to this demand, conventionally, barrier films formed from resins that are considered to have relatively high oxygen barrier properties and laminate bodies (laminate films) using such a barrier film as a film substrate have been used.

Conventionally, resins containing a highly hydrophilic hydrogen-bonding group in the molecule, such as polyacrylic acid and polyvinyl alcohol, have been used as oxygen barrier resins. Packaging materials made of these resins show extremely excellent oxygen barrier properties under dry conditions. Meanwhile, there has been a problem in that under high-humidity conditions, the oxygen barrier properties significantly decrease due to the hydrophilicity of the resin.

In order to solve these problems, a method in which a polycarboxylic acid-based polymer layer and a polyvalent metal compound-containing layer are laminated adjacent to each other on a substrate, and the two layers are allowed to react to form a polyvalent metal salt of the polycarboxylic acid, thereby preparing a gas barrier packaging material, is known. However, the production of such a gas barrier packaging material requires several kinds of coating liquids, and it is necessary to perform application several times, requiring time and effort.

As a gas barrier composition that exhibits high barrier properties through a reduced number of application steps, the present applicant has previously found a gas barrier composition including a carboxyl group-containing resin (A), which is a homopolymer or copolymer of a monomer having a high acid value, such as acrylic acid, methacrylic acid, maleic acid, or itaconic acid, a divalent metal compound (B), and an alcohol (C), in which the content of the alcohol (C) in the composition is 85 to 98 wt%, and the moisture content in the composition is 1% or less (see, e.g., PTL 2). Although the composition showed high gas barrier properties, and the storage stability of the composition itself was good, there has been a problem in that when used as a coating agent, the composition is slightly inferior in coatability and stability.

CITATION LIST

PATENT LITERATURE

    PTL 1: JP2007-112114A
    PTL 2: WO20/203766

SUMMARY OF INVENTION

TECHNICAL PROBLEM

An object of the invention is to provide a gas barrier composition, which exhibits high barrier properties through a reduced number of application steps and is also excellent in coatability and stability when used as a coating agent.

SOLUTION TO PROBLEM

The present inventors have found that when, as a carboxyl group-containing resin, the homopolymer or copolymer of a monomer having a high acid value, such as acrylic acid, methacrylic acid, maleic acid, or itaconic acid having a high acid value, disclosed in PTL 2 is applied as a coating agent, partial gelation occurs as the solvent evaporates, which reduces the coatability. They have also found that a specific gas barrier composition containing, as an alternative resin, a polyester polyol resin or polyurethane polyol resin (A) having an acid value of 150 mg KOH/g or less, a divalent metal compound, and an organic solvent can solve the above problems.

That is, the invention provides a gas barrier composition including (A) a polyester polyol resin or polyurethane polyol resin having an acid value, (B) a divalent metal compound, and an organic solvent, in which the acid value of the polyester polyol resin or polyurethane polyol resin (A) in the composition is 150 mgKOH/g or less.

The invention also provides a gas barrier coating agent containing the composition described above.

The invention also provides a laminate body having a substrate and a coat layer obtained by applying the coating agent described above.

The invention also provides a gas barrier coating agent containing the above composition, the gas barrier coating agent being a two-component type composed of: (CA) a composition containing the polyester polyol resin or polyurethane polyol resin (A) and an organic solvent; and (CB) a composition containing the divalent metal compound (B) and an organic solvent.

The invention also provides a laminate body having a substrate, a coat layer (CA) obtained by applying the composition (CA) described above, and a coat layer (CA) obtained by applying the composition (CB) described above.

The invention also provides a packaging material having the laminate body described above.

ADVANTAGEOUS EFFECTS OF INVENTION

The gas barrier composition of the invention is a composition combining a polyester polyol resin or polyurethane polyol resin (A) having an acid value of 150 mgKOH/g or less, a divalent metal compound, and an organic solvent. During its application as a coating agent, even if the solvent evaporates, partial gelation is unlikely to occur, and the coatability is not reduced. Further, the gas barrier composition of the invention can be used as a one-component coating agent containing the entire composition, and can also be used as a two-component coating agent composed of a composition (CA) containing the polyester polyol resin or polyurethane polyol resin (A) and an organic solvent and a composition (CB) containing the divalent metal compound (B) and an organic solvent. In either way, the composition can exhibit high barrier properties and be favorably used as a gas barrier coating agent.

In addition, a laminate body obtained by applying the composition to a substrate has excellent gas barrier properties and can therefore be favorably used as a packaging material, particularly as a packaging material that is required to have barrier properties, such as those for food products, daily necessities, electronic materials, and medical use.

Further, the laminate body also has excellent heat resistance and moist heat resistance and can therefore be favorably used as a packaging material for heat sterilization such as boiling or retorting.

DESCRIPTION OF EMBODIMENTS

<Gas Barrier Composition>

The gas barrier composition of the invention is a composition including (A) a polyester polyol resin or polyurethane polyol resin having an acid value of 150 mg KOH/g or less, (B) a divalent metal compound, and an organic solvent.

<Polyester Polyol Resin or Polyurethane Polyol Resin (A) Having Acid Value>

The polyester polyol resin or polyurethane polyol resin (A) having an acid value used in the invention (hereinafter sometimes referred to as resin (A)) is characterized by having an acid value of 150 mgKOH/g or less. The acid value is preferably 120 mg KOH/g or less, and more preferably 100 mg KOH/g or less. Incidentally, the lower limit may be 10 mgKOH/g or more, and is more preferably 20 mgKOH/g or more.

(Acid Value Measurement Method)

An acid value is the number of mg of potassium hydroxide required to neutralize the acids present in 1 g of a sample. Specifically, an acid value can be measured by a method in which a weighed sample is dissolved in an appropriate solvent that dissolves the sample, for example, a solvent having a toluene/methanol volume ratio = 70/30, then several drops of a 1% phenolphthalein alcohol solution are added thereto, and a 0.1 mol/L potassium hydroxide alcohol solution is added dropwise thereto to check the point of color change, and can be determined by the following formula.

Acid Value Measurement Method-1

$$\text{Acid value (mgKOH/g)} = (V \times F \times 5.61)/S$$

V: Amount of 0.1 mol/L potassium hydroxide alcohol solution used (mL)

F: Potency of 0.1 mol/L potassium hydroxide alcohol solution

S: Amount of sample collected (g)

5.61: Potassium hydroxide-equivalent amount in 1 mL of 0.1 mol/L potassium hydroxide alcohol solution (mg)

In the case where the sample is a resin solution, the resin acid value (mgKOH/g) can be calculated by the following formula.

Resin acid value (mgKOH/g) = Acid value of resin solution (mgKOH/g)/NV (%) $\times$ 100

NV: Non-volatile content (%)

In addition, in the case where the sample has low solubility in an organic solvent and undergoes deposition or the like, making the measurement difficult, the acid value can also be measured by the following method.

Acid Value Measurement Method-2

An acid value (mgKOH/g-resin) is a value calculated by the following formula using a coefficient (f) obtained from a calibration curve made with a chloroform solution of maleic anhydride using FT-IR (FT-IR4200, manufactured by JASCO Corporation), the absorbance (I) of the stretching peak (1,780 cm-1) of the anhydride ring of maleic anhydride in a maleic anhydride-modified polyolefin solution, and the absorbance (II) of the stretching peak (1,720 cm-1) of the carbonyl group of maleic acid.

Acid value (mgKOH/g-resin) = [(Absorbance (I) $\times$ (f) $\times$ 2 $\times$ molecular weight of potassium hydroxide $\times$ 1,000 (mg) + absorbance (II) $\times$ (f) $\times$ molecular weight of potassium hydroxide $\times$ 1,000 (mg))/molecular weight of maleic anhydride]

Molecular weight of maleic anhydride: 98.06

Molecular weight of potassium hydroxide: 56.11

Although the molecular weight of the resin (A) used in the invention is not particularly limited, from the viewpoint of coating film formability, it is preferable that the number average molecular weight is 300 to 1,200,000, particularly preferably 500 to 1,000,000.

The weight average molecular weight of the resin (A) can be calculated by measurement using a gel permeation chromatography (GPC) method.

(Polyester Polyol Resin Having Acid Value)

The polyester polyol resin having an acid value used in the invention is not particularly limited, and known resins can be used. For example, polyester polyols obtained by the polycondensation of a polycarboxylic acid and a polyhydric alcohol by a known method can be mentioned.

The acid value of the polyester polyol resin (A) used in the invention can be controlled by a known method without any particular limitation. For example, a method in which after the start of an esterification polycondensation reaction, sampling is performed to check the remaining amount of polycarboxylic acid while measuring the acid value, and the reaction is stopped when the target acid value is reached, etc., can be mentioned.

As polycarboxylic acids, for example, aliphatic polycarboxylic acids such as succinic acid, adipic acid, azelaic acid, sebacic acid, and dodecanedicarboxylic acid; unsaturated bond-containing polycarboxylic acids such as maleic anhydride, maleic acid, and fumaric acid; alicyclic polycarboxylic acids such as 1,3-cyclopentanedicarboxylic acid and 1,4-cyclohexanedicarboxylic acid; aromatic polycarboxylic acids such as terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, acid anhydrides and ester-forming derivatives of these dicarboxylic acids, p-hydroxybenzoic acid, p-(2-hydroxyethoxy)benzoic acid, and ester-forming derivatives of these dihydroxycarboxylic acids; and ortho-oriented polycarboxylic acids such as orthophthalic acid and anhydrides thereof (phthalic anhydride), naphthalene 2,3-dicarboxylic acid and anhydrides thereof, naphthalene 1,2-dicarboxylic acid and anhydrides thereof, anthraquinone 2,3-dicarboxylic acid and anhydrides thereof, and 2,3-anthracene carboxylic acid and anhydrides thereof can be mentioned. These compounds may have a substituent on any carbon atom of the aromatic ring. As such substituents, a chloro group, a bromo group, a methyl group, an ethyl group, an i-propyl group, a hydroxyl group, a methoxy group, an ethoxy group, a phenoxy group, a methylthio group, a phenylthio group, a cyano group, a nitro group, an amino group, a phthalimido group, a carboxyl group, a carbamoyl group, an N-ethylcarbamoyl group, a phenyl group, a naphthyl group, and the like can be mentioned.

These polycarboxylic acids can be used alone, and it is also possible to use two or more kinds together.

As polyhydric alcohols, for example, aliphatic diols such as ethylene glycol, propylene glycol, butylene glycol, neopentyl glycol, cyclohexanedimethanol, 1,5-pentanediol, 3-methyl-1,5-pentanediol, 1,6-hexanediol, methylpentanediol, dimethylbutanediol, butylethylpropanediol, diethylene glycol, triethylene glycol, tetraethylene glycol, dipropylene glycol, and tripropylene glycol; trihydric or higher polyhydric alcohols such as glycerol, trimethylolpropane, trimethylolethane, tris(2-hydroxyethyl)isocyanurate, 1,2,4-butanetriol, pentaerythritol, and dipentaerythritol; aromatic polyhydric phenols such as hydroquinone, resorcinol, catechol, naphthalenediol, biphenol, bisphenol A, bisphenol F, tetramethylbiphenol, ethylene oxide-extended products thereof, and hydrogenated alicyclic compounds; and the like can be exemplified. These polyhydric alcohols can be used alone, and it is also possible to use two or more kinds together.

In the case where the polyester polyol has three or more hydroxyl groups, some of the hydroxyl groups may be modified with an acid group. Such a polyester polyol can be obtained, for example, by allowing a polycarboxylic acid to react with a polyhydric alcohol in advance to obtain a polyester polyol, and further allowing a polycarboxylic acid or its acid anhydride to react therewith. The proportion of hydroxyl groups modified with a polycarboxylic acid is preferably 1/3 or less of the hydroxyl groups in the polyester polyol.

(Polyurethane Polyol Resin (A) Having Acid Value)

The polyurethane polyol resin having an acid value used in the invention is not particularly limited, and known resins can be used. For example, polyurethane polyols obtained by the polycondensation of a polyhydric alcohol and an isocyanate compound by a known method can be mentioned.

As the polyhydric alcohol, the polyhydric alcohols mentioned above for the polyester polyol can be used. In addition, the polyester polyols mentioned above may also be directly used as polyols. A polyol in such a case is a polyester polyurethane polyol.

The acid value of the polyurethane polyol resin (A) used in the invention can be controlled by a known method without any particular limitation. For example, it can be obtained by a method in which a polyester polyol, a carboxyl group-containing polyhydric alcohol, or the like within the target acid value range is selected and subjected to a urethane reaction with an isocyanate compound, etc.

As carboxyl group-containing polyhydric alcohols, for example, 2,2'-dimethylolpropionic acid, 2,2'-dimethylolbutanoic acid, 2,2'-dimethylolbutyric acid, 2,2'-dimethylolvaleric acid, and the like that are diols having one carboxyl group, tartaric acid that is a diol having two or more carboxyl groups, and the like can be mentioned.

As isocyanate compounds, conventionally known ones may be used without any particular limitation, and tetramethylene diisocyanate, hexamethylene diisocyanate, toluene diisocyanate, diphenylmethane diisocyanate, hydrogenated diphenylmethane diisocyanate, xylylene diisocyanate, hydrogenated xylylene diisocyanate, isophorone diisocyanate, and trimers of these isocyanate compounds, as well as adducts obtained by allowing excess amounts of these isocyanate compounds to react with low molecular weight active hydrogen compounds, such as ethylene glycol, propylene glycol, metaxylylene alcohol, 1,3-bishydroxyethylbenzene, 1,4-bishydroxyethylbenzene, trimethylolpropane, glycerol, pentaerythritol, erythritol, sorbitol, ethylenediamine, monoethanolamine, diethanolamine, triethanolamine, and metaxylylenediamine, for example, or alkylene oxide adducts thereof, or with high molecular weight active hydrogen compounds such as various polyester resins, polyether polyols, and polyamides, for example, can be mentioned. It is also possible to use a polyester polyisocyanate obtained by allowing a polyester polyol to react with a diisocyanate compound in such a hydroxyl to isocyanate group ratio that isocyanate is in excess. They can be used alone, and it is also possible to use two or more kinds together.

As an isocyanate compound, a blocked isocyanate may also be used. As isocyanate blocking agents, for example, phenols such as phenol, thiophenol, methylthiophenol, ethylthiophenol, cresol, xylenol, resorcinol, nitrophenol, and chlorophenol, oximes such as acetoxime, methyl ethyl ketoxime, and cyclohexanone oxime, alcohols such as methanol, ethanol, propanol, and butanol, halogen-substituted alcohols such as ethylene chlorohydrin and 1,3-dichloro-2-propanol, tertiary alcohols such as t-butanol and t-pentanol, and lactams such as $\varepsilon$-caprolactam, $\delta$-valerolactam, $\gamma$-butyrolactam, and $\beta$-propylolactam can be mentioned, and, in addition to them, aromatic amines, imides, active methylene compounds such as acetylacetone, acetoacetate, and ethyl malonate, mercaptans, imines, ureas, diaryl compounds, sodium bisulfite, and the like can also be mentioned. A blocked isocyanate is obtained by subjecting the above isocyanate compound and isocyanate blocking agent to an addition reaction by a known, conventional, suitable method.

<Divalent Metal Compound (B)>

The metal compound (B) used in the invention is characterized by being a divalent metal compound.

The divalent metal compound (B) is a compound of a divalent metal. As the divalent metal compound (B), zinc compounds, magnesium compounds, calcium compounds, manganese compounds, iron compounds, cobalt compounds, nickel compounds, copper compounds, and the like can be mentioned, and zinc compounds, magnesium compounds, and calcium compounds are particularly preferable. These metal compounds may be used alone, and it is also possible to use two or more kinds together.

The divalent metal compound (B) is preferably an oxide, hydroxide, or carbonate of a divalent metal, and may also be a mixture of them.

As specific compounds, the divalent metal compound (B) is preferably zinc oxide, magnesium oxide, or calcium oxide, and particularly preferably zinc oxide or magnesium oxide.

The divalent metal compound (B) is preferably in the form of particles. Fine particles having an average particle size of 500 nm or less and 10 nm or more are still more preferable. Fine particles of 20 nm to 300 nm are particularly preferable.

The average particle size here can be measured using a dynamic light scattering particle size distribution measuring apparatus, for example, LB-500 (manufactured by HORIBA, Ltd.).

<Organic Solvent>

The organic solvent used in the invention is not particularly limited, and solvents usually used as organic solvents can be used. For example, toluene, xylene, methylene chloride, tetrahydrofuran, methyl acetate, ethyl acetate, n-propyl acetate, n-butyl acetate, acetone, methyl ethyl ketone (MEK), cyclohexanone, toluol, xylol, n-hexane, cyclohexane, methanol, ethanol, propanol, butanol, hexanol, pentanol, and the like can be mentioned. They can be used alone, and it is also possible to use two or more kinds together.

<Gas Barrier Composition>

The gas barrier composition of the invention is characterized by including the resin (A), the divalent metal compound (B), and an organic solvent.

The solids content is not particularly limited, but is preferably 5 to 20 mass% in the composition.

In addition, in the total solids, the solids content of the divalent metal compound (B) is preferably 20 to 90 mass%, more preferably 60 to 80 mass%, based on the total solids mass.

The total amount of the resin (A) and the divalent metal compound (B) is preferably 5 to 40 mass%, particularly preferably 5 to 20 mass%.

Within these ranges, the gas barrier properties can be particularly sufficiently exhibited.

In addition, as the ratio between the resin (A) and the divalent metal compound (B), the divalent metal compound (B) is preferably 20 to 90 mass% based on the total amount of the resin (A) and the divalent metal compound (B). Within this range, gas barrier properties and coating performance can be simultaneously achieved well. The amount is particularly preferably 60 to 80 mass%.

The gas barrier composition of the invention may contain materials other than the resin (A), the divalent metal compound (B), and an organic solvent.

(Additives)

The gas barrier composition of the invention may contain various additives as long as the effect of the invention is not impaired. As additives, for example, coupling agents, silane compounds, phosphoric acid compounds, organic fillers, inorganic fillers, stabilizers (antioxidants, heat stabilizers, UV absorbers, etc.), plasticizers, antistatic agents, lubricants, antiblocking agents, colorants, crystal nucleating agents, oxygen scavengers (compounds having an oxygen scavenging function), tackifiers, and the like can be exemplified. These various additives are used alone or as a combination of two or more kinds.

Coupling agents may be known conventional ones, and, for example, silane coupling agents, titanium coupling agents, zirconium coupling agents, aluminum coupling agents, and the like can be mentioned.

Silane coupling agents used may be known conventional ones, and, for example, epoxy group-containing silane coupling agents such as 3-glycidoxypropyltrimethoxysilane, 3-glycidoxypropyltriethoxysilane, 3-glycidoxypropylmethyldiethoxysilane, and 2-(3,4-epoxycyclohexyl)ethyltrimethoxysilane; amino group-containing silane coupling agents such as 3-aminopropyltrimethoxysilane, N-2-(aminoethyl)-3-aminopropylmethyldimethoxysilane, 3-triethoxysilyl-N-(1,3-dimethylbutylidene)propylamine, and N-phenyl-γ-aminopropyltrimethoxysilane; (meth)acryloyl group-containing silane coupling agents such as 3-acryloxypropyltrimethoxysilane and 3-methacryloxypropyltriethoxysilane; isocyanate group-containing silane coupling agents such as 3-isocyanatepropyltriethoxysilane; and the like can be mentioned.

As titanium coupling agents, for example, isopropyl triisostearoyl titanate, isopropyl trioctanoyl titanate, isopropyl dimethacryl isostearoyl titanate, isopropyl isostearoyl diacryl titanate, isopropyl tris(dioctyl pyrophosphate) titanate, tetraoctyl bis(ditridecyl phosphite) titanate, tetra(2,2-diallyloxymethyl-1-butyl) bis(ditridecyl)phosphite titanate, bis(dioctyl pyrophosphate) oxyacetate titanate, bis(dioctyl pyrophosphate) ethylene titanate, and the like can be mentioned.

As zirconium coupling agents, for example, zirconium acetate, ammonium zirconium carbonate, zirconium fluoride, and the like can be mentioned.

As aluminum coupling agents, acetoalkoxyaluminum diisopropylates, aluminum diisopropoxymonoethylacetoacetate, aluminum trisethylacetoacetate, aluminum trisacetylacetonate, and the like can be mentioned.

As silane compounds, alkoxysilanes, silazanes, siloxanes, and the like can be mentioned. As alkoxysilanes, methyltrimethoxysilane, dimethyldimethoxysilane, phenyltrimethoxysilane, methyltriethoxysilane, dimethyldiethoxysilane, phenyltriethoxysilane, n-propyltrimethoxysilane, n-propyltriethoxysilane, hexyltrimethoxysilane, hexyltriethoxysilane, octyltriethoxysilane, decyltrimethoxysilane, 1,6-bis(trimethoxysilyl)hexane, trifluoropropyltrimethoxysilane, and the like can be mentioned. As silazanes, hexamethyldisilazane and the like can be mentioned. As siloxanes, hydrolyzable group-containing siloxanes and the like can be mentioned.

Among additives, as inorganic fillers, inorganic substances such as metals, metal oxides, resins, and minerals, as well as composites thereof, can be mentioned. As specific examples of inorganic fillers, silica, alumina, titanium, zirconia, copper, iron, silver, mica, talc, aluminum flakes, glass flakes, clay minerals, and the like can be mentioned.

As compounds having an oxygen scavenging function, for example, low molecular weight organic compounds that react with oxygen, such as hindered phenol-based compounds, vitamin C, vitamin E, organic phosphorus compounds, gallic acid, and pyrogallol, transition metal compounds such as cobalt, manganese, nickel, iron, and copper, and the like can be mentioned.

As tackifiers, xylene resins, terpene resins, phenol resins, rosin resins, and the like can be mentioned. The addition of a tackifier can improve tackiness to various substrates immediately after application. The amount of tackifier added is preferably 0.01 to 5 parts by mass per 100 parts by mass of the total amount of the resin composition.

<Gas Barrier Coating Agent>

The gas barrier coating agent of the invention can be used as a one-component gas barrier coating agent, in which the resin (A), divalent metal compound (B), and organic solvent constituting the gas barrier composition mentioned above make one component, and can also be used as a two-component gas barrier coating agent, which is composed of a composition (CA) containing the polyester polyol resin or polyurethane polyol resin (A) and an organic solvent and a composition (CB) containing the divalent metal compound (B) and an organic solvent. In either way, high barrier properties are exhibited.

(One-Component Gas Barrier Coating Agent and Laminate Body Using the Same)

The one-component gas barrier coating agent of the invention can be obtained by mixing the resin (A), divalent metal compound (B), and organic solvent. The one-component gas barrier coating agent can be simply directly applied to a substrate and dried to obtain a coat layer having gas barrier properties. The laminate body of the invention is a laminate body having a substrate and the coat layer obtained by applying the one-component gas barrier coating agent.

In the coat layer coated with the gas barrier composition of the invention, the resin (A) and the divalent metal compound (B) form an ionic bond. When the coating agent is applied to a substrate, the volatiles are eliminated. As a result, the resin (A) and the divalent metal compound (B) form an ionic bond, and, due to the cross-linked structure, barrier properties are exhibited.

Therefore, it is presumed that because the one-component gas barrier coating agent exhibits gas barrier properties when simply applied and dried, and also because the cross-links extend three-dimensionally inside the coat layer, higher gas barrier properties are exhibited.

In the one-component gas barrier coating agent of the invention, the acid value of the polyester polyol resin or polyurethane polyol resin (A) is 150 mg KOH/g or less. Even if the organic solvent volatilizes, gelation with the divalent metal compound (B) is unlikely to occur, and the coatability is maintained.

(Substrate)

The substrate used in the invention is not particularly limited in material, production method, or shape as long as the effects of the invention can be obtained. However, in many cases, film-shaped substrates (sometimes also referred to as "sheet", but referred to as "film" in the invention) are used. As materials for these substrates, for example, olefin-based resins such as polyethylene (PE), polypropylene (PP), cyclic olefin polymers (COP), and cyclic olefin copolymers (COC), polyester, acrylic, polycarbonate, cellulose ester, polyethylene terephthalate (PET), polybutylene terephthalate (PBT), nylon (NY), and materials containing a biomass-derived component can be mentioned. In particular, films made of a thermoplastic resin containing an olefin-based resin as a main component can be used without any particular limitation. As olefin-based resins, specifically, olefin resins such as polyethylenes including low-density polyethylene, medium-density polyethylene, high-density polyethylene, straight-chain (linear) low-density polyethylene, etc., polypropylene (PP), ethylene-propylene copolymers, $\alpha$-olefin polymers, ethylene-vinyl acetate copolymers, ethylene-vinyl alcohol copolymers, ethylene-acrylic acid copolymers, ethylene-methyl methacrylate copolymers, ethylene-ethyl acrylate copolymers, cyclic olefin resins, ionomer resins, and polymethylpentene; and modified olefin-based resins obtained by modifying olefin resins with acrylic acid, methacrylic acid, maleic anhydride, fumaric acid, or other unsaturated carboxylic acids can be mentioned.

The substrate is not particularly limited and may be a substrate having a thickness usually used for packaging food products, daily necessities, medical supplies, and the like. From the viewpoint of moldability and transparency, it may be a film having a thickness within a range of 1 $\mu$m to 500 $\mu$m, preferably 1 $\mu$m to 300 $\mu$m, and more preferably 1 $\mu$m to 100 $\mu$m. A thickness of less than 1 $\mu$m results in insufficient strength, while a thickness of more than 500 $\mu$m results in rigidity that is too high, possibly making processing difficult.

The method for producing these substrates is not particularly limited, and they can be produced using various film-forming methods such as a melt extrusion molding method, a solution casting molding method, and a calendar molding method, and may be further subjected to a biaxial stretching or uniaxial stretching treatment and used. In addition, films that have been subjected to various surface treatments as necessary may also be used.

An inorganic layer may be formed on at least one surface of the substrate. Inorganic substances forming such inorganic layers are not particularly limited as long as the effects of the invention can be obtained, but it is preferable to use at least one member selected from metals and metal oxides such as aluminum oxide, silicon oxide, aluminum, zinc oxide, magnesium oxide, calcium oxide, and zirconium oxide, and, for the reason that barrier properties are exhibited well, it is particularly preferable to use at least one member selected from aluminum oxide, silicon oxide, aluminum, zinc oxide, and magnesium oxide. The method for forming an inorganic layer is not particularly limited as long as the effects of the invention can be obtained, and it can be formed by a deposition treatment, a sputtering treatment, a CVD treatment, or a coating treatment. For the reason that an inorganic layer can be formed uniformly, it is particularly preferable to use a deposition treatment or a sputtering treatment.

Of course, wood, metals, metal oxides, paper, silicon, and modified silicon other than those mentioned above can be mentioned, and substrates obtained by joining different materials can also be used. The shape of such a substrate is not particularly limited and may be any shape according to the purpose, such as a flat plate, a sheet shape, or a three-dimensional shape having a curvature over the entire surface or partially.

The method for applying the one-component gas barrier coating agent of the invention to the substrate is not particularly limited, and known conventional application methods can be used. For example, a spraying method, a spin coating method, a dipping method, a roll coating method, a blade coating method, a doctor roll method, a doctor blade method, a curtain coating method, a slit coating method, a screen printing method, an inkjet method, a dispensing method, and the like can be mentioned.

In the coat layer obtained by applying the one-component gas barrier coating agent of the invention, as a result of drying after application, the density of ionic bonds in the coat layer increases, leading to enhanced gas barrier properties. Accordingly, it is preferable to provide a drying step after application. The drying step may be room-temperature drying, and it is also possible to perform forced drying such as heating, decompression, or air blowing.

(Other Layers)

The laminate body of the invention may be combined with various layers, including other substrate layers, printed layers, functional coating layers, adhesive layers, and the like.

(Other Substrate Layers)

As other substrate layers, for example, olefin-based resins such as polyethylene (PE), polypropylene (PP), cyclic olefin polymers (COP), and cyclic olefin copolymers (COC), polyester, acrylic, polycarbonate, cellulose ester, polyethylene terephthalate (PET), polybutylene terephthalate (PBT), nylon (NY), and materials containing a biomass-derived component can be mentioned. In particular, films made of a thermoplastic resin containing an olefin-based resin as a main component can be used without any particular limitation. As olefin-based resins, specifically, olefin resins such as polyethylenes including low-density polyethylene, medium-density polyethylene, high-density polyethylene, straight-chain (linear) low-density polyethylene, etc., polypropylene, ethylene-propylene copolymers, $\alpha$-olefin polymers, ethylene-vinyl acetate copolymers, ethylene-vinyl alcohol copolymers, ethylene-acrylic acid copolymers, ethylene-methyl methacrylate copolymers, ethylene-ethyl acrylate copolymers, cyclic olefin resins, ionomer resins, and polymethylpentene; and modified olefin-based resins obtained by modifying olefin resins with acrylic acid, methacrylic acid, maleic anhydride, fumaric acid, or other unsaturated carboxylic acids can be mentioned. Among them, for the reason that the effects of the invention can be prominently obtained, it is preferable to use an olefin-based resin such as polyethylene (PE), polypropylene (PP), a cyclic olefin polymer (COP), or a cyclic olefin copolymer (COC), and polyethylene (PE) and polypropylene (PP) are most preferable.

In addition, the substrate may be wood, a metal, a metal oxide, a resin film other than the resins shown above for the layer (A), paper, silicon, modified silicon, or the like, or may also be obtained by joining different materials, for example. The shape of the substrate is not particularly limited and may be any shape according to the purpose, such as a flat plate, a sheet shape, or a three-dimensional shape having a curvature over the entire surface or partially. In addition, the hardness, thickness, and the like of the substrate are not particularly limited either. In addition, in the case where the laminate body according to the invention is used as a packaging material, the substrate used may be paper, a plastic, a metal, a metal oxide, or the like.

(Printed Layer)

A printed layer is a layer on which characters, figures, symbols, and other desired designs, for example, are printed. The printing method or printing ink is not particularly limited, and known printing methods and printing inks can be used. As the printing ink frequently used for a film used as the substrate, printing inks using a gravure printing method, a flexographic printing method, a lithographic offset printing method, an ink jet recording printing method, or the like are often used. In addition, printing inks combining these printing methods with a method of curing with an active energy ray such as ultraviolet (UV) light, LED, or an electron beam (EB), a method of curing with heat, or the like are also used. In addition, depending on the solvent used, expressions such as "water-based ink" and "organic solvent-based ink" are also used.

Specifically, gravure printing inks and flexographic printing inks (in some industries, gravure printing ink and flexographic printing ink are sometimes referred to as liquid ink), UV-curable inks for lithographic offset printing, EB-curable inks for lithographic offset printing, UV-curable inks for inkjet recording and printing, EB-curable inks for inkjet recording and printing, and the like can be mentioned.

The position where a printed layer printed using these inks is provided is arbitrary. The layer may be provided on the first substrate, or it is also possible that a substrate separately provided with the printed layer is one of the components of the laminate body of the invention; the position is arbitrary. In addition, the ink may contain a resin, a colorant, and a solvent as essential components, or may also be a so-called clear ink that contains a resin and a solvent but does not substantially contain a colorant.

Hereinafter, liquid inks that are most commonly used for printing on a film will be described.

Resins used for a liquid ink are not particularly limited, and, for example, acrylic resins, polyester resins, styrene resins, styrene-maleic acid resins, maleic acid resins, polyamide resins, polyurethane resins, vinyl chloride-vinyl acetate copolymer resins, vinyl chloride-acrylic copolymer resins, ethylene-vinyl acetate copolymer resins, vinyl acetate resins, polyvinyl chloride resins, chlorinated polypropylene resins, cellulose-based resins, epoxy resins, alkyd resins, rosin-based resins, rosin-modified maleic acid resins, ketone resins, cyclized rubber, chlorinated rubber, butyral, petroleum resins, and the like can be mentioned. They can be used alone, and it is also possible to use two or more kinds together. It is preferable to use at least one member selected from polyurethane resins, vinyl chloride-vinyl acetate copolymer resins, and cellulose-based resins, or two or more of them.

As colorants used for a liquid ink, inorganic pigments such as titanium oxide, red iron oxide, antimony red, cadmium red, cadmium yellow, cobalt blue, Prussian blue, ultramarine blue, carbon black, and graphite, organic pigments such as soluble azo pigments, insoluble azo pigments, azo lake pigments, condensed azo pigments, copper phthalocyanine pigments, and condensed polycyclic pigments, and extender pigments such as calcium carbonate, kaolin clay, barium sulfate, aluminum hydroxide, and talc can be mentioned.

The organic solvent used in a liquid ink preferably does not contain an aromatic hydrocarbon-based organic solvent. More specifically, alcohol-based organic solvents such as methanol, ethanol, n-propanol, isopropyl alcohol, and butanol, ketone-based organic solvents such as acetone, methyl ethyl ketone, and methyl isobutyl ketone, ester-based organic solvents such as methyl acetate, ethyl acetate, propyl acetate, and butyl acetate, aliphatic hydrocarbon-based organic solvents such as n-hexane, n-heptane, and n-octane, alicyclic hydrocarbon-based organic solvents such as cyclohexane, methylcyclohexane, ethylcyclohexane, cycloheptane, and cyclooctane, and the like can be mentioned. They can be used alone, and it is also possible to use a combination of two or more kinds.

(Functional Coating Layer)

As functional coating layers, for example, coating agents having added thereto various additives and the like can be mentioned. As additives, for example, modifiers, coupling agents, silane compounds, phosphoric acid compounds, organic fillers, inorganic fillers, stabilizers (antioxidants, heat stabilizers, UV absorbers, etc.), plasticizers, antistatic agents, lubricants, antiblocking agents, colorants, crystal nucleating agents, oxygen scavengers (compounds having an oxygen scavenging function), tackifiers, and the like can be exemplified. These various additives are used alone or as a combination of two or more kinds.

Modifiers may be known conventional ones, and, for example, various compounds such as diols, amine compounds, carbodiimides, and isocyanates may be added and used.

Coupling agents may be known conventional ones, and, for example, silane coupling agents, titanium coupling agents, zirconium coupling agents, aluminum coupling agents, and the like can be mentioned.

Silane coupling agents used may be known conventional ones, and, for example, epoxy group-containing silane coupling agents such as 3-glycidoxypropyltrimethoxysilane, 3-glycidoxypropyltriethoxysilane, 3-glycidoxypropylmethyldiethoxysilane, and 2-(3,4-epoxycyclohexyl)ethyltrimethoxysilane; amino group-containing silane coupling agents such as 3-aminopropyltrimethoxysilane, N-2-(aminoethyl)-3-aminopropylmethyldimethoxysilane, 3-triethoxysilyl-N-(1,3-dimethylbutylidene)propylamine, and N-phenyl-γ-aminopropyltrimethoxysilane; (meth)acryloyl group-containing silane coupling agents such as 3-acryloxypropyltrimethoxysilane and 3-methacryloxypropyltriethoxysilane; isocyanate group-containing silane coupling agents such as 3-isocyanatepropyltriethoxysilane; and the like can be mentioned.

As titanium coupling agents, for example, isopropyl triisostearoyl titanate, isopropyl trioctanoyl titanate, isopropyl dimethacryl isostearoyl titanate, isopropyl isostearoyl diacryl titanate, isopropyl tris(dioctyl pyrophosphate) titanate, tetraoctyl bis(ditridecyl phosphite) titanate, tetra(2,2-diallyloxymethyl-1-butyl) bis(ditridecyl)phosphite titanate, bis(dioctyl pyrophosphate) oxyacetate titanate, bis(dioctyl pyrophosphate) ethylene titanate, and the like can be mentioned.

As zirconium coupling agents, for example, zirconium acetate, ammonium zirconium carbonate, zirconium fluoride, and the like can be mentioned.

As aluminum coupling agents, acetoalkoxyaluminum diisopropylates, aluminum diisopropoxymonoethylacetoacetate, aluminum trisethylacetoacetate, aluminum trisacetylacetonate, and the like can be mentioned.

As silane compounds, alkoxysilanes, silazanes, siloxanes, and the like can be mentioned. As alkoxysilanes, methyltrimethoxysilane, dimethyldimethoxysilane, phenyltrimethoxysilane, methyltriethoxysilane, dimethyldiethoxysilane, phenyltriethoxysilane, n-propyltrimethoxysilane, n-propyltriethoxysilane, hexyltrimethoxysilane, hexyltriethoxysilane, octyltriethoxysilane, decyltrimethoxysilane, 1,6-bis(trimethoxysilyl)hexane, trifluoropropyltrimethoxysilane, and the like can be mentioned. As silazanes, hexamethyldisilazane and the like can be mentioned. As siloxanes, hydrolyzable group-containing siloxanes and the like can be mentioned.

Among additives, as inorganic fillers, inorganic substances such as metals, metal oxides, resins, and minerals, as well as composites thereof, can be mentioned. As specific examples of inorganic fillers, silica, alumina, titanium, zirconia, copper, iron, silver, mica, talc, aluminum flakes, glass flakes, clay minerals, and the like can be mentioned.

As compounds having an oxygen scavenging function, for example, low molecular weight organic compounds that react with oxygen, such as hindered phenol-based compounds, vitamin C, vitamin E, organic phosphorus compounds, gallic acid, and pyrogallol, transition metal compounds such as cobalt, manganese, nickel, iron, and copper, and the like can be mentioned.

As tackifiers, xylene resins, terpene resins, phenol resins, rosin resins, and the like can be mentioned. The addition of a tackifier can improve tackiness to various substrates immediately after application. The amount of tackifier added is preferably 0.01 to 5 parts by mass per 100 parts by mass of the total amount of the resin composition.

(Adhesive Layer)

As an adhesive layer, for the purpose of laminating the laminate body of the invention with other substrates and the like, adhesives that can be used in general-purpose laminating methods can be used. As laminating methods, for example, dry lamination, wet lamination, non-solvent lamination, extrusion lamination, and like methods can be mentioned.

As the adhesive used for the above dry lamination, for example, one-component or two-component, curable or non-curable vinyl-based, (meth)acrylic-based, polyamide-based, polyester-based, polyether-based, polyurethane-based, epoxy-based, rubber-based, or the like solvent-based, water-based, or emulsion-based adhesives can be used. As a two-component curable adhesive, a two-component curable adhesive composed of a polyol and an isocyanate compound can be used. As a coating method, the laminating adhesive can be applied by, for example, a direct gravure roll coating method, a gravure offset roll coating method, a kiss coating method, a reverse roll coating method, a fountain method, a transfer roll coating method, or other methods.

In addition, various adhesive agents may also be used, and it is preferable to use pressure-sensitive adhesive agents. As pressure-sensitive adhesive agents, for example, rubber-based adhesive agents obtained by dissolving polyisobutylene rubber, butyl rubber, or a mixture thereof in an organic solvent such as benzene, toluene, xylene, or hexane; these rubber-based adhesive agents having incorporated therein tackifiers such as abietic acid rosin esters, terpene-phenol copolymers, and terpene-indene copolymers; acrylic-based adhesive agents obtained by dissolving an acrylic-based copolymer having a glass transition point of - 20°C or less, such as a 2-ethylhexyl acrylate-n-butyl acrylate copolymer or a 2-ethylhexyl acrylate-ethyl acrylate-methyl methacrylate copolymer, in an organic solvent; and the like can be mentioned.

(Two-Component Gas Barrier Coating Agent and Laminate Body Using the Same)

The two-component gas barrier coating agent of the invention includes a composition (CA) obtained by mixing the polyester polyol resin or polyurethane polyol resin (A) and an organic solvent and a composition (CB) obtained by mixing the divalent metal compound (B) and an organic solvent. The two-component coating agent can be used as follows. For example, a composition (CA) is applied to a substrate and dried to obtain a coat layer (CA) of the composition (CA), and then a composition (CB) is applied onto the coat layer (CA) and dried to obtain a coat layer (CB).

In addition, the laminate body of the invention is a laminate body having a substrate, a coat layer (CA) obtained by applying the composition (CA) of the two-component gas barrier coating agent, and a coat layer (CB) obtained by applying the composition (CB) of the two-component gas barrier coating agent.

The order of the laminate body may be substrate/coat layer (CA)/coat layer (CB),, or may also be substrate//coat layer (CB)/coat layer (CA). It is necessary that the coat layer (CA) and the coat layer (CB) are in contact with each other.

That is, in a coat layer coated with the gas barrier composition of the invention, the resin (A) and the divalent metal compound (B) form an ionic bond, and, due to the resulting cross-linked structure, barrier properties are exhibited. Therefore, in the case of a two-component gas barrier coating agent, the coat layer (CA) and the coat layer (CB) need to be in contact with each other, and, as a result of contact between these layers, gas barrier properties are developed.

As the substrate, application method, and the like in the laminate body using the two-component gas barrier coating agent of the invention, the same substrate and methods as those mentioned above for the laminate body having a coat layer obtained by applying the one-component gas barrier coating agent of the invention onto a substrate can be used.

The timing for laminating the coat layer (CA) and the coat layer (CB) may be such that the previously applied coat layer (CA) or coat layer (CB) is completely dried, and then the next coat layer (CA) or coat layer (CB) is applied, or the next layer may also be applied before complete drying.

In addition, as various other substrate layers, printed layers, functional coating layers, adhesive layers, and the like that can be combined, the same layers as those mentioned above for the laminate body having a coat layer obtained by applying the one-component gas barrier coating agent of the invention onto a substrate can be combined.

(Kinds of Gas Components Whose Transmission Can Be Blocked)

As gases that the laminate body of the invention can block, in addition to oxygen, inert gases such as carbon dioxide, nitrogen, and argon, alcohol components such as methanol, ethanol, and propanol, and phenols such as phenol and cresol, as well as aroma components composed of low molecular weight compounds, such as soy sauce, sauce, *miso* (soybean paste), limonene, menthol, methyl salicylate, coffee, cocoa, shampoos, and conditioners, for example, can be exemplified.

<Packaging Material and Packaging Material for Heat Sterilization>

The laminate body of the invention has excellent gas barrier properties and can therefore be favorably used as a packaging material that is required to have gas barrier properties. In particular, because food products, daily necessities, electronic materials, medical use, and the like require high barrier properties, the packaging material of the invention can be favorably used therefor.

Further, the laminate body also has excellent heat resistance and moist heat resistance and can therefore be favorably used as a packaging material for heat sterilization such as boiling or retorting.

As the contents to be packaged, for example, as food products, confectioneries such as rice crackers, bean snacks, nuts, biscuits, cookies, wafers, marshmallows, pies, semi-dried cakes, candies, and snacks, staple foods such as bread, snack noodles, instant noodles, dried noodles, pasta, aseptically packaged cooked rice, seasoned rice porridge, rice porridge, packaged rice cakes, and cereal foods, processed agricultural products such as pickles, boiled beans, *natto* (fermented soybeans), *miso,* frozen *tofu* (soybean curd), *tofu, nametake* (enoki mushroom simmered in a soy-based sweet sauce), konjac, processed wild vegetable products, jams, peanut cream, salads, frozen vegetables, and processed potato products, processed animal products such as ham, bacon, sausage, processed chicken products, and corned beef products, processed marine products such as fish ham and sausage, fish paste products, *kamaboko* (boiled fish paste), dried seaweed, *tsukudani* (food simmered in a soy-based sweet sauce), bonito flakes, *shiokara* (marine animals fermented in salt), smoked salmon, and spicy cod roe, pulp of fruits such as peaches, mandarins, pineapples, apples, pears, and cherries, vegetables such as corn, asparagus, mushrooms, onions, carrots, radishes, and potatoes, precooked foods such as frozen and chilled delicatessen products, including hamburger steaks, meatballs, seafood fries, gyoza dumplings, and croquettes, dairy products such as butter, margarine, cheese, cream, instant creamy powders, and infant formulas, liquid seasonings, retort-pouch curry, pet foods, and other food products can be mentioned.

In addition, the laminate body can also be used as a packaging material for various non-food products, including cigarettes, disposable heating pads, medical supplies such as infusion packs, liquid laundry detergents, liquid kitchen detergents, liquid bath detergents, liquid bath soaps, liquid shampoos, liquid conditioners, cosmetics such as lotions and milky lotions, vacuum insulation materials, batteries, and the like.

(Recycled Plastics)

The laminate body and packaging material of the invention can also be directly processed by various known recycled plastic processing methods to produce recycled plastics. In an example of a specific embodiment, a recycled plastic can be obtained by a production method including a step of crushing a salvaged material obtained by separating the laminate body of the invention into the respective substrates or the laminate body or packaging material of the invention, a step of melt-kneading the crushed film pieces, and a step of pelletizing the kneaded product resulting from melt-kneading.

The crusher used for crushing (grinding) is not particularly limited, and known grinders may be used.

The film pieces after grinding are physically blended by melt-kneading, solvent cast blending, latex blending, polymer complexing, or the like. A melt-kneading method is particularly common. As apparatuses for kneading, tumblers, Henschel mixers, rotary mixers, super mixers, ribbon tumblers, V-blenders, and the like can be mentioned. The film pieces are melt-kneaded in such a kneading apparatus and then pelletized. A single-screw or multi-screw extruder is commonly used for melt-kneading and pelletization, and the film pieces may be fed as they are or may also be subjected to a compression volume-reduction treatment with or without heating and then fed. Further, in addition to these extruders, Banbury mixers, rollers, co-kneaders, blast mills, Brabender Plastograph, and the like can also be used, and they are operated batchwise or continuously. In addition, a method in which the film pieces are used as a molding resin without being melt-kneaded, and melt-kneaded in the heating barrel of a molding machine, is also possible.

Examples

The invention will be described with reference to the following examples, but the invention is not limited to these examples. Incidentally, unless otherwise specified, the units are by weight.

(Production Example 1: Method for Producing Polyester Polyol Resin Having Acid Value)

In a polyester reaction vessel equipped with a stirrer, a nitrogen gas inlet tube, a rectification column, a moisture separator, and the like, 100.0 parts of phthalic anhydride, 5.0 parts of ethylene glycol, 90.0 parts of glycerol, 85.0 parts of ethyl acetate, and 0.30 parts of titanium tetraisopropoxide were charged and gradually heated in such a manner that the temperature at the top of the rectification column did not exceed 100°C, and the internal temperature was maintained at 220°C. The esterification reaction was completed when the acid value reached a range of 40 to 50 mg/KOH/g, thereby giving an ethyl acetate solution of PEs 1: a polyester polyol resin having a number average molecular weight of 3,000. The acid value of PEs 1 was 50 mg/KOH/g, and the solids concentration was 60%.

(Production Example 2: Method for Producing Polyester Polyol Resin Having Acid Value)

In the reaction vessel of Production Example 1, 200.0 parts of phthalic anhydride, 5.0 parts of ethylene glycol, 90.0 parts of glycerol, 125.0 parts of ethyl acetate, and 0.30 parts of titanium tetraisopropoxide were charged and gradually heated in such a manner that the temperature at the top of the rectification column did not exceed 100°C, and the internal temperature was maintained at 220°C. The esterification reaction was completed when the acid value reached a range of 90 to 100 mg/KOH/g, thereby giving an ethyl acetate solution of PEs 2: a polyester polyol resin having a number average molecular weight of 4,000. The acid value of PEs 2 was 100 mg/KOH/g, and the solids concentration was 60%.

(Production Example 3: Method for Producing Polyester Polyol Resin Having Acid Value)

In the reaction vessel of Production Example 1, 100.0 parts of terephthalic acid, 5.0 parts of ethylene glycol, 90.0 parts of glycerol, 85.0 parts of ethyl acetate, and 0.30 parts of titanium tetraisopropoxide were charged and gradually heated in such a manner that the temperature at the top of the rectification column did not exceed 100°C, and the internal temperature was maintained at 220°C. The esterification reaction was completed when the acid value reached a range of 40 to 50 mg/KOH/g, thereby giving an ethyl acetate solution of PEs 3: a polyester polyol resin solution having a number average molecular weight of 3,000. The acid value of PEs 3 was 50 mg/KOH/g, and the solids concentration was 60%.

(Production Example 4: Method for Producing Polyester Polyol Resin Having Acid Value)

In the reaction vessel of Production Example 1, 200.0 parts of terephthalic acid, 5.0 parts of ethylene glycol, 90.0 parts of glycerol, 125.0 parts of ethyl acetate, and 0.30 parts of titanium tetraisopropoxide were charged and gradually heated in such a manner that the temperature at the top of the rectification column did not exceed 100°C, and the internal temperature was maintained at 220°C. The esterification reaction was completed when the acid value reached a range of 90 to 100 mg/KOH/g, thereby giving an ethyl acetate solution of PEs 4: a polyester polyol resin having a number average molecular weight of 4,000. The acid value of PEs 4 was 100 mg/KOH/g, and the solids concentration was 60%.

(Production Example 5: Method for Producing Polyester Polyol Resin Having Acid Value)

In the reaction vessel of Production Example 1, 100.0 parts of phthalic anhydride, 95.0 parts of glycerol, 85.0 parts of ethyl acetate, and 0.30 parts of titanium tetraisopropoxide were charged and gradually heated in such a manner that the temperature at the top of the rectification column did not exceed 100°C, and the internal temperature was maintained at 220°C. The esterification reaction was completed when the acid value reached a range of 40 to 50 mg/KOH/g, thereby giving an ethyl acetate solution of PEs 5: a polyester polyol resin having a number average molecular weight of 3,000. The acid value of PEs 5 was 50 mg/KOH/g, and the solids concentration was 60%.

(Production Example 6: Method for Producing Polyester Polyol Resin Having Acid Value)

In the reaction vessel of Production Example 1, 200.0 parts of phthalic anhydride, 100.0 parts of glycerol, 85.0 parts of ethyl acetate, and 0.30 parts of titanium tetraisopropoxide were charged and gradually heated in such a manner that the temperature at the top of the rectification column did not exceed 100°C, and the internal temperature was maintained at 220°C. The esterification reaction was completed when the acid value reached a range of 90 to 100 mg/KOH/g, thereby giving an ethyl acetate solution of PEs 6: a polyester polyol resin having a number average molecular weight of 3,000. The acid value of PEs 6 was 100 mg/KOH/g, and the solids concentration was 60%.

(Production Example 7: Method for Producing Polyester Polyol Resin Having Acid Value)

In the reaction vessel of Production Example 1, 150.0 parts of phthalic anhydride, 150.0 parts of terephthalic acid, 140.0 parts of adipic acid, 50.0 parts of ethylene glycol, 110.0 parts of diethylene glycol, 100.0 parts of neopentyl glycol, 300.0 parts of ethyl acetate, and 0.60 parts of titanium tetraisopropoxide were charged and gradually heated in such a manner that the temperature at the top of the rectification column did not exceed 100°C, and the internal temperature was maintained at 220°C. The esterification reaction was completed when the acid value reached 2 mg/KOH/g or less, thereby giving an ethyl acetate solution of PEs 7: a polyester polyol resin having a number average molecular weight of 6,000. The acid value of PEs 7 was 1 mg/KOH/g, and the solids concentration was 60%.

(Production Example 8: Method for Producing Polyurethane Polyol Resin Having Acid Value)

In the reaction vessel of Production Example 1, 90.0 parts by mass of DMPA (2,2-dimethylolpropanoic acid), 54.0 parts by mass of methyl ethyl ketone, and 81 parts by mass of tetrahydrofuran were charged and stirred in a nitrogen stream. Next, 56.0 parts by mass of XDI (xylylene diisocyanate) was charged, and the temperature was raised to 60°C. After stirring for 1 hour, the temperature was lowered to 40°C or less, then 56.0 parts by mass of XDI was further charged, and the temperature was raised to 60°C again. The reaction was continued until the disappearance of isocyanate groups was observed by infrared spectroscopy. Next, 148.0 parts by mass of methanol was added as a dilution solvent, thereby giving a methyl ethyl ketone-tetrahydrofuran solution of Ure 1: a carboxyl group-containing urethane resin. The acid value of Ure 1 was 40 mg/KOH/g, and the solids concentration was 60%.

(Production Example 9: Method for Producing Polyurethane Polyol Resin Having Acid Value)

In the reaction vessel of Production Example 1, 252.8 parts of phthalic anhydride, 62.0 parts of ethylene glycol, 128.6 parts of neopentyl glycol, 105.8 parts of 1,6-hexanediol and 298.6 parts of ethyl acetate were charged, followed by esterification. After the completion of esterification, 18.2 g of isophorone diisocyanate and 109.6 parts of ethyl acetate were charged, and urethanization was allowed to proceed. The urethanization reaction was terminated when the acid value reached 1 mgKOH/g or less, thereby giving an ethyl acetate solution of Ure 2: a polyurethane polyol resin. The acid value of Ure 2 was 1 mg/KOH/g, and the solids concentration was 60%.

(Production Example 10: Method for Producing Polyether Polyurethane Polyol Resin Having No Acid Value)

In the reaction vessel of Production Example 1, 213.7 parts of a bifunctional polypropylene glycol (hereinafter sometimes abbreviated as PPG) having a molecular weight of 400, 225.2 parts of a bifunctional PPG having a molecular weight of 700, 69.0 parts of a bifunctional PPG having a molecular weight of 2,000, and 41.1 parts of a trifunctional PPG having a molecular weight of 430 were charged, and, with stirring, 152.6 parts of tolylene diisocyanate was fed. After 90°C was reached, 306.0 parts of ethyl acetate was fed, and the reaction temperature was maintained at 90°C to perform synthesis. It was checked that the NCO (%) was 0.1% or less, and the viscosity measured with a Brookfield viscometer was within 2,000 to 3,000 mPa, thereby giving Ether 1: a polyether polyurethane polyol resin. The solids concentration was 60%.

(Production Example 11: Method for Producing Polyvinyl Alcohol Solution (Hereinafter Sometimes Abbreviated as PVA))

5 g of Kuraray Poval (Brand: 28-98) manufactured by Kuraray Co., Ltd., and 95 g of water were mixed in a 200-ml vial, and warmed and stirred at 80°C, thereby giving a PVA solution. The acid value of this solution was 0 mg/KOH/g.

(Production Example 12: Method for Producing Polyacrylic Acid Solution (Hereinafter Sometimes Abbreviated as PAA))

2 g of Aron A-10H manufactured by Toagosei Co., Ltd., and 98 g of isopropyl alcohol were mixed in a 200-ml vial, and warmed and stirred at 80°C, thereby giving a PAA solution. The acid value of this solution was 748 mg/KOH/g.

(Production Example 13: Method for Producing Dispersion Liquid of Divalent Metal Compound Zinc Oxide (ZnO))

200 g of ZnO having a primary particle size of 20 nm (FINEX-50, manufactured by Sakai Chemical Industry Co., Ltd.) and 800 g of methyl ethyl ketone were mixed and subjected to a dispersion treatment in a bead mill (manufactured by Kotobuki Co., Ltd.: Ultra Apexmill UAM-015) for 1 hour using zirconia beads having a diameter of 0.3 mm. Subsequently, the beads were sieved, thereby giving a ZnO solution having a solids concentration of 20%. This solution is referred to as ZnO (MEK dispersion). The particle size of ZnO in the dispersion liquid was 150 nm.

(One-Component Gas Barrier Coating Agent, Preparation of Laminate Body Using the Same, and Evaluation Method)

(Examples 1 to 7, Comparative Examples 1 to 3)

According to the recipe in Table 1, gas barrier compositions of Examples 1 to 7 and Comparative Examples 1 to 3 were prepared and used as gas barrier coating agents. The coating agents were each applied to a PET film (thickness: 12 μm), thereby giving a laminate body. The oxygen transmission rate, the stability of the coating solution, and the coating appearance were evaluated.

(Method for Applying Gas Barrier Coating Agent)

K303 bar No. 1 Yellow/6 μm, K303 bar No. 2 Red/12 μm, K303 bar No. 3 Green/24 μm, and K303 bar No. 4 Black/40 μm (Matsuo Sangyo Co., Ltd) were prepared, and a gas barrier coating agent was applied to a PET film (manufactured by Toyobo Ester Film Co., Ltd.: E5100: thickness: 12 μm), followed by drying at 80°C for 1 minute to form a coat layer, thereby giving a laminate body. The bar was selected such that the weight of the coat layer upon sample drying would be about 1.0 g/m$^2$.

<Evaluation of Gas Barrier Properties of Laminate Body: Oxygen Transmission Rate>

The laminate bodies obtained in the previous section were used for evaluation. The oxygen transmission rate (hereinafter sometimes abbreviated as OTR) was measured in accordance with JIS-K7126 (equal pressure method) using an oxygen transmission rate measuring apparatus OX-TRAN1/50 manufactured by MOCON in an atmosphere having a temperature of 23°C and a humidity of 0% RH and also in an atmosphere having a temperature of 23°C and a humidity of 90% RH. RH stands for relative humidity. The unit of OTR is cc/day·atm·m$^2$, and a lower value indicates better barrier properties. The evaluation was as follows.

5: OTR: 20 cc or less
4: OTR: 20 cc to 40 cc
3: OTR: 40 cc to 60 cc
2: OTR: 60 cc to 100 cc
1: OTR: 100 cc or more

<Stability of Coating Solution and Appearance Evaluation>

The smoothness during the application of each gas barrier coating agent shown in the recipe in Table 1 was evaluated according to the following criteria. The weight of the resin component contained was set to be the same among the coating liquids, and the solids content during application was adjusted to be constant at about 8%.

(Coating Film Smoothness Evaluation)

1: A smooth coating film is obtained
0: Due to an increase in the viscosity of the solution, a uniform coating film cannot be obtained. Deposition of ZnO is seen.

The results are shown in Table 1.

[Table 1]

| Table 1 | | Solids Content (%) | Example 1 | Example 2 | Example 3 | Example 4 | Example 5 | Example 6 | Example 7 | Comparative Example 1 | Comparative Example 2 | Comparativ Example 3 |
|---|---|---|---|---|---|---|---|---|---|---|---|---|
| Resin (A) | PEs 1 | 60 | 1 | | | | | | | | | |
| | PEs 2 | 60 | | 1 | | | | | | | | |
| | PEs 3 | 60 | | | 1 | | | | | | | |
| | PEs 4 | 60 | | | | 1 | | | | | | |
| | PEs 5 | 60 | | | | | 1 | | | | | |
| | PEs 6 | 60 | | | | | | 1 | | | | |
| | Ure 1 | 60 | | | | | | | 1 | | | |
| Comparative Resin | PEs 7 | 60 | | | | | | | | 1 | | |
| | PVA Solution | 5 | | | | | | | | | 1 | |
| | PAA Solution | 2 | | | | | | | | | | 1 |
| Divalent Metal Compound | ZnO (MEK Dispersion) | 20 | 39 | 39 | 39 | 39 | 39 | 39 | 39 | 39 | 39 | 39 |
| Organic Solvent | MEK | 0 | 60 | 60 | 60 | 60 | 60 | 60 | 60 | 60 | 60 | 60 |
| Total Gas Barrier Composition | | | 100 | 100 | 100 | 100 | 100 | 100 | 100 | 100 | 100 | 100 |
| Solids Content of Gas Barrier Composition (%) | | | 8.4 | 8.4 | 8.4 | 8.4 | 8.4 | 8.4 | 8.4 | 8.4 | 7.9 | 7.8 |
| Solids Acid Value of Resin (A) (mg/KOH/g) | | | 50 | 100 | 50 | 100 | 50 | 100 | 40 | 1 | 0 | 748 |
| Oxygen Transmission | 23°C 0%RH | | 5 | 5 | 5 | 5 | 5 | 5 | 5 | 1 | 5 | 1 |
| | 23°C 90%RH | | 5 | 5 | 5 | 5 | 5 | 5 | 5 | 1 | 1 | 1 |
| Smoothness of Coating Film | | | 1 | 1 | 1 | 1 | 1 | 1 | 1 | 1 | 0 | 0 |

EP 4 617 317 A1

In Examples 1 to 7, excellent oxygen barrier properties and smooth coating films were obtained. It is presumed that after the coating solution was applied to a film and dried, the carboxyl groups present in the resin solution and $Zn^{2+}$ ionized from ZnO caused an ionic cross-linking reaction, and the free volume in the coating film was reduced, resulting in the development of excellent oxygen barrier properties. It is presumed that because the ionic cross-linking reaction does not progress when the solution is allowed to stand, a smooth coating film was obtained. In Comparative Example 1, although a smooth coating film was obtained, the oxygen barrier properties were poor. This is presumably because PEs 7 had almost no acid value, and therefore the ionic cross-linking reaction did not proceed. In Comparative Example 2, although good oxygen barrier properties were obtained at 0% RH, the oxygen barrier properties were poor at 90% RH, and the smoothness of the coating film was also poor. This is presumably because PVA is a water-soluble resin and therefore has poor compatibility with ZnO (MEK dispersion). Comparative Example 3 received poor evaluations in all items. Because PAA has a high acid value and is highly reactive with ZnO (dispersed in MEK), a gel product was formed, making it impossible to obtain a uniform coating film, and the oxygen barrier properties were also poor.

(Two-Component Gas Barrier Coating Agent, Preparation of Laminate Body Using the Same, and Evaluation Method)

(Examples 8 to 12, Comparative Examples 4 and 5)

Compositions (CA) and (CB) of Examples 8 to 12 and Comparative Examples 4 and 5 were prepared according to the recipe in Table 2, and they were used as two-component gas barrier coating agents. The coating agents were each applied to a PET film (thickness: 12 $\mu$m), thereby giving a laminate body. The oxygen transmission rate was evaluated in the normal state and after retorting.

(Method for Producing Laminate Body of PET Film/Coat Layer (CA)/Coat Layer (CB))

(Application Method for First Layer)

The composition (CA) shown in Table 2 was applied to a PET film (manufactured by Toyobo Ester Film Co., Ltd.: E5100: thickness: 12 $\mu$m) using a bar coater to obtain a coat layer (CA). As the bar coater, one that would give a weight of about 1.0 g/m$^2$ after drying at 80°C for 1 minute was selected.

(Application Method for Second Layer)

The composition (CB) shown in Table 2 was applied onto the coat layer (CA) made above using a bar coater to obtain a coat layer (CB). As the bar coater, one that would give a weight of about 1.0 g/m$^2$ after drying at 80°C for 1 minute was selected.

(Preparation of Laminate Film)

In the laminate body of PET film/coat layer (CA)/coat layer (CB) obtained in the previous section, a laminating adhesive was applied to the coat layer (CB) surface, and a CPP film (manufactured by Toray Advanced Film Co., Ltd.: ZK-93KM, 70 $\mu$m thick) was attached thereto to prepare a laminate film. As the laminating adhesive, a mixture of DIC Dry LX-703 (polyol material) and DIC Dry KR-90 (polyisocyanate material), both manufactured by DIC Corporation, in a predetermined ratio was used, and applied so that the coating weight was within a range of 2.5 to 3.0 g/m$^2$. Aging was performed at 40°C for 3 days.

(Retort Evaluation of Laminate Film)

The laminate film obtained in the previous section was cut into 150 mm $\times$ 300 mm, folded with CPP inside, and heat-sealed at 1 atm and 210°C for 1 second to prepare a pouch. Water was added as the contents. The filled pouch was subjected to a steam sterilization treatment under conditions of 120°C and 30 minutes, and, after removal, opened and subjected to the oxygen transmission evaluation.

[Table 2]

| Table 2 | | | Solids Content (%) | Example 8 | Example 9 | Example 10 | Example 11 | Example 12 | Comparative Example 4 | Comparative Example 5 |
|---|---|---|---|---|---|---|---|---|---|---|
| First-Layer Coat Material | Resin (A) | PEs 1 | 60 | 10 | 10 | 10 | | | | |
| | | PEs 2 | 60 | | | | 10 | | | |
| | | Ure 1 | 60 | | | | | 10 | | |
| | Comparative Resin | PEs 7 | 60 | | | | | | 10 | |
| | | PVA | 5 | | | | | | | 100 |
| | Organic Solvent | MEK Solution | 0 | 90 | 90 | 90 | 90 | 90 | 90 | 0 |
| | Total Composition (CA) | | | 100 | 100 | 100 | 100 | 100 | 100 | 100 |
| | Solids Content of Composition (CA) (%) | | | 6.0 | 6.0 | 6.0 | 6.0 | 6.0 | 6.0 | 5.0 |
| | Solids Acid Value of Resin (A) (mg/KOH/g) | | | 50 | 50 | 50 | 100 | 40 | 1 | 0 |
| Second-Layer Coat Material | Resin | PEs 7 | 60 | 1 | | | 1 | 1 | 1 | 1 |
| | | Ure 2 | 60 | | 1 | | | | | |
| | | Ether 1 | 60 | | | 1 | | | | |
| | Divalent Metal Compound (B) | ZnO (MEK Dispersion) | 20 | 39 | 39 | 39 | 39 | 39 | 39 | 39 |
| | Organic Solvent | MEK | 0 | 60 | 60 | 60 | 60 | 60 | 60 | 60 |
| | Total Composition (CB) | | | 100 | 100 | 100 | 100 | 100 | 100 | 100 |
| | Solids Content of Composition (CB) (%) | | | 8.4 | 8.4 | 8.4 | 8.4 | 8.4 | 8.4 | 8.4 |
| Laminate Film: Oxygen Transmission Rate in Normal State | 23°C 0%RH | | | 5 | 5 | 5 | 5 | 5 | 1 | 5 |
| | 23°C 90%RH | | | 5 | 5 | 5 | 5 | 5 | 1 | 1 |
| Laminate Film: Oxygen Transmission Rate after Retorting | 23°C 0%RH | | | 5 | 5 | 5 | 5 | 5 | 1 | 1 |
| | 23°C 90%RH | | | 5 | 5 | 5 | 5 | 5 | 1 | 1 |

EP 4 617 317 A1

18

In Examples 8 to 12, excellent oxygen barrier properties were obtained both in the normal state and after retorting. It is presumed that the carboxyl groups of the acid value-containing resin applied as a first layer caused an ionic cross-linking reaction with $Zn^{2+}$ ionized from ZnO applied as a second layer, and the free volume in the coating film was reduced, resulting in the development of excellent oxygen barrier properties. When a retort treatment is performed, usually, the laminate film is abused, resulting in the deterioration of the barrier properties. It is presumed that in Examples 8 to 12 according to the invention, through the retort treatment, the ionization of ZnO applied as the second layer further proceeded, the ionic cross-linking with the first layer became stronger, and, as a result, good oxygen barrier properties were maintained.

In Comparative Example 4, because PEs 7 applied as a first layer had almost no acid value, ionic cross-linking did not proceed, and oxygen barrier properties were not obtained. In Comparative Example 5, although the PVA solution had good oxygen barrier properties under low-humidity conditions, good oxygen barrier properties were not obtained under high-humidity conditions or after retorting.

**Claims**

1. A gas barrier composition comprising (A) a polyester polyol resin or polyurethane polyol resin having an acid value, (B) a divalent metal compound, and an organic solvent, wherein the acid value of the polyester polyol resin or polyurethane polyol resin (A) in the composition is 150 mgKOH/g or less.

2. The gas barrier composition according to claim 1, wherein the divalent metal compound (B) is at least one member selected from zinc compounds, magnesium compounds, and calcium compounds.

3. The gas barrier composition according to claim 1, wherein the divalent metal compound (B) is in the form of fine particles having an average particle size of 500 nm or less.

4. The gas barrier composition according to claim 1, wherein the divalent metal compound (B) has a solids content of 20 to 90 mass% based on the total solids mass of the composition.

5. A gas barrier coating agent comprising the composition according to any one of claims 1 to 4.

6. A laminate body comprising a substrate and a coat layer obtained by applying the coating agent according to claim 5.

7. A packaging material comprising the laminate body according to claim 6.

8. A gas barrier coating agent comprising the composition according to any one of claims 1 to 4,
   the gas barrier coating agent being a two-component type composed of:

   (CA) a composition containing the polyester polyol resin or polyurethane polyol resin (A) and an organic solvent; and
   (CB) a composition containing the divalent metal compound (B) and an organic solvent.

9. A laminate body comprising a substrate, a coat layer (CA) obtained by applying the composition (CA) according to claim 8, and a coat layer (CA) obtained by applying the composition (CB) according to claim 8.

10. A packaging material comprising the laminate body according to claim 9.

# EP 4 617 317 A1

| A. | CLASSIFICATION OF SUBJECT MATTER |
|---|---|

*C08L 67/00*(2006.01)i; *B32B 27/18*(2006.01)i; *B32B 27/40*(2006.01)i; *B65D 65/40*(2006.01)i; *C08K 3/22*(2006.01)i;
*C08L 75/04*(2006.01)i; *C09D 7/61*(2018.01)i; *C09D 133/00*(2006.01)i; *C09D 175/04*(2006.01)i
FI: C08L67/00; B32B27/40; B32B27/18 Z; C08L75/04; C08K3/22; B65D65/40 D; C09D133/00; C09D175/04; C09D7/61

According to International Patent Classification (IPC) or to both national classification and IPC

| B. | FIELDS SEARCHED |
|---|---|

Minimum documentation searched (classification system followed by classification symbols)

C08L67/00; B32B27/18; B32B27/40; B65D65/40; C08K3/22; C08L75/04; C09D7/61; C09D133/00; C09D175/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2010/061705 A1 (KUREHA CORP.) 03 June 2010 (2010-06-03) claims, paragraphs [0029]-[0031], [0085], [0265], examples 1, 13 | 1-8 |
| A | JP 2015-16657 A (DIC CORP.) 29 January 2015 (2015-01-29) | 1-10 |
| A | WO 2013/005767 A1 (DIC CORP.) 10 January 2013 (2013-01-10) | 1-10 |
| A | WO 2014/103994 A1 (DIC CORP.) 03 July 2014 (2014-07-03) | 1-10 |
| A | JP 2007-112114 A (UNITIKA LTD.) 10 May 2007 (2007-05-10) | 1-10 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 December 2023** | **26 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/038626**

| Patent document cited in search report | | | Publication date (day/month/year) | Patent family member(s) | | | Publication date (day/month/year) |
|---|---|---|---|---|---|---|---|
| WO | 2010/061705 | A1 | 03 June 2010 | US | 2011/0217561 | A1 | |
| | | | | claims, paragraphs [0030]-[0032], [0088], [0269], examples 1, 13 | | | |
| | | | | EP | 2351803 | A1 | |
| | | | | CN | 102216404 | A | |
| JP | 2015-16657 | A | 29 January 2015 | (Family: none) | | | |
| WO | 2013/005767 | A1 | 10 January 2013 | JP | 2013-14722 | A | |
| | | | | JP | 2013-18904 | A | |
| | | | | JP | 2013-18905 | A | |
| WO | 2014/103994 | A1 | 03 July 2014 | US | 2016/0053110 | A1 | |
| | | | | EP | 2940075 | A1 | |
| | | | | CN | 104870561 | A | |
| | | | | TW | 201431894 | A | |
| JP | 2007-112114 | A | 10 May 2007 | US | 2010/0151265 | A1 | |
| | | | | WO | 2007/034940 | A1 | |
| | | | | EP | 1930153 | A1 | |
| | | | | KR | 10-2008-0063788 | A | |
| | | | | CN | 101272906 | A | |
| | | | | TW | 200728072 | A | |

Form PCT/ISA/210 (patent family annex) (January 2015)

**REFERENCES CITED IN THE DESCRIPTION**

**Patent documents cited in the description**

- JP 2007112114 A

- WO 20203766 A